# EUROPEAN PATENT APPLICATION

(11) **EP 4 723 740 A1**
(43) Date of publication of application: **08.04.2026**
(21) Application number: 24203917.0
(22) Date of filing: 01.10.2024
(51) Int. Cl.: H04W 36/14, H04W 48/18, H04W 48/16, H04W 48/20, H04W 76/19, H04W 76/30, H04W 84/12, H04W 88/06

(54) **APPARATUS, METHOD, COMPUTER PROGRAM FOR HANDOFFS**

(71) Applicant: Nokia Solutions and Networks Oy, 02610 Espoo (FI)
(72) Inventor: Isaacs, Jeffrey, Murray Hill, New Jersey 07974 (US); Coss, Michael, Murray Hill, New Jersey 07974 (US); Hadzic, Ilija, Murray Hill, New Jersey 07974 (US); Benno, Steven, Murray Hill, New Jersey 07974 (US)
(74) Representative: Swindell & Pearson Limited

(57) **Abstract**

An apparatus comprising: at least a first wireless communication interface and a second wireless communication interface, wherein the first and second wireless communication interfaces are configured to create and maintain separate wireless connections with different access points, and wherein the first and second wireless communication interfaces are configured to operate using the same radio access technology or different radio access technologies; and means for establishing a first wireless connection to a first access point using the first wireless communication interface, wherein the first wireless connection is configured as a primary data connection for the apparatus and using the second wireless communication interface to discover at least a second access point, establish a second wireless connection to the second access point and perform at least one active measurement to determine whether the second wireless connection should be used as the primary data connection for the apparatus.

## Description

### TECHNOLOGICAL FIELD

Examples of the disclosure relate to apparatus, method, computer program for handoffs. Some relate to handoffs in relation to wireless local area network (WLAN) associated with the Institute of Electrical and Electronics Engineers (IEEE) 802.11 family of standards.

### BACKGROUND

In certain circumstances client devices in a wireless network perform handoffs to a new access point, for example if the client device is mobile.

It would be desirable to improve and/or enhance how client devices in a wireless network perform handoffs. For example, it may be desirable to enable handoffs in a network, such as wireless networks associated with the IEEE 802.11 family of standards, that are not designed to perform handoffs, or handoffs between different wireless networks and so on.

### BRIEF SUMMARY

According to various, but not necessarily all, embodiments there is provided an apparatus comprising:
at least a first wireless communication interface and a second wireless communication interface, wherein the first and second wireless communication interfaces are configured to create and maintain separate wireless connections with different access points, and wherein the first and second wireless communication interfaces are configured to operate using the same radio access technology or different radio access technologies; and
means for:
   establishing a first wireless connection to a first access point using the first wireless communication interface, wherein the first wireless connection is configured as a primary data connection for the apparatus;
   determining that at least a second access point is available for connection;
   establishing, while the first wireless connection is established, a second wireless connection to the second access point using the second wireless communication interface;
   making at least one active measurement based, at least in part, on the second wireless connection;
   determining whether to change the primary data connection for the apparatus from the first access point to the second access point based, at least in part, on the at least one active measurement; and
   in response to determining that the primary data connection for the apparatus should be changed from the first access point to the second access point, releasing the first wireless connection, maintaining or re-establishing the second wireless connection and configuring the second wireless connection as the primary data connection for the apparatus.

In some examples, the first and the second wireless communication interfaces each are configured to operate using one of the following radio access technologies: wireless local area network, WLAN, associated with the Institute of Electrical and Electronics Engineers, IEEE, 802.11 family of standards, and
a 3^{rd} Generation Partnership Project, 3GPP, cellular radio access technology.

In some examples, determining that at least a second access point is available for connection comprises scanning for signals from at least one available access point using the second wireless communication interface.

In some examples, determining that at least a second access point is available for connection comprises determining that a plurality of access points is available for connection, and wherein the means are configured to:
establish in turn, while the first wireless connection is established, a second wireless connection to a plurality of access points available for connection using the second wireless communication interface;
make at least one active measurement for each of the plurality of access points to which a second wireless connection is made based, at least in part, on the second wireless connection with each of the plurality of access points;
determine whether to change the primary data connection for the apparatus from the first access point to another access point based, at least in part, on the at least one active measurement made for each of the plurality of access points to which a second wireless connection is made; and
in response to determining that the primary data connection for the apparatus should be changed from the first access point to another access point, release the first wireless connection, maintain or re-establish the second wireless connection with the another access point and configure the second wireless connection with the another access point as the primary data connection for the apparatus.

In some examples, making at least one active measurement based, at least in part, on the second wireless connection comprises transmitting and/or receiving information using the second wireless connection.

In some examples, making at least one active measurement based, at least in part, on the second wireless connection comprises at least one of:
measuring at least one rate control algorithm metric;
sending internal control message protocol, ICMP, echo packets to an endpoint of interest and measuring loss and/or round-trip time, RTT, between ICMP echo-reply packet received as response and a related ICMP echo packet;
establishing a transmission control protocol, TCP, connection and measuring throughput;
establishing a TCP connection and measuring at least one TCP metric;
measuring the size of the maximum transmission unit, MTU, on the second wireless connection;
measuring the loss of a user datagram protocol, UDP, stream to an endpoint of interest;
tracking the lower layer retransmissions on a physical WLAN link associated with the Institute of Electrical and Electronics Engineers, IEEE, 802.11 family of standards.

Ins some examples, determining whether to change the primary data connection for the apparatus comprises comparing the at least one active measurement based, at least in part, on the second wireless connection and at least one corresponding active measurement based, at least in part, on the first wireless connection.

In some examples, comparing the at least one active measurement based, at least in part, on the second wireless connection and at least one corresponding active measurement based, at least in part, on the first wireless connection comprises using a threshold to prevent repeated connection changes between the first access point and the second access point.

In some examples, the means are configured to determine that the first wireless connection is degrading or is going to degrade, and wherein determining whether to change the primary data connection for the apparatus from the first access point to the second access point is based, at least in part, on determining that the first wireless connection is degrading or is going to degrade.

In some examples, the means are configured to:
after the first wireless connection has been released, swap the roles of the first wireless communication interface and the second wireless communication interface.

In some examples, the apparatus is a mobile user device.

According to various, but not necessarily all, embodiments there is provided a method comprising:
establishing a first wireless connection to a first access point using a first wireless communication interface of an apparatus, wherein the first wireless connection is configured as a primary data connection for the apparatus;
determining that at least a second access point is available for connection;
establishing, while the first wireless connection is established, a second wireless connection to the second access point using a second wireless communication interface of the apparatus, wherein the first and second wireless communication interfaces are configured to create and maintain separate wireless connections with different access points, and wherein the first and second wireless communication interfaces are configured to operate using the same radio access technology or different radio access technologies;
making at least one active measurement based, at least in part, on the second wireless connection;
determining whether to change the primary data connection for the apparatus from the first access point to the second access point based, at least in part, on the at least one active measurement; and
in response to determining that the primary data connection for the apparatus should be changed from the first access point to the second access point, releasing the first wireless connection, maintaining or re-establishing the second wireless connection and configuring the second wireless connection as the primary data connection for the apparatus.

In some examples, the first and the second wireless communication interface each are configured to operate using one of the following radio access technologies: wireless local area network, WLAN, associated with the Institute of Electrical and Electronics Engineers, IEEE, 802.11 family of standards, and
a 3^{rd} Generation Partnership Project, 3GPP, cellular radio access technology.

According to various, but not necessarily all, embodiments there is provided a computer program comprising instructions which, when executed by an apparatus, cause the apparatus to perform at least:
establishing a first wireless connection to a first access point using a first wireless communication interface of an apparatus, wherein the first wireless connection is configured as a primary data connection for the apparatus;
determining that at least a second access point is available for connection;
establishing, while the first wireless connection is established, a second wireless connection to the second access point using a second wireless communication interface of the apparatus, wherein the first and second wireless communication interfaces are configured to create and maintain separate wireless connections with different access points, and wherein the first and second wireless communication interfaces are configured to operate using the same radio access technology or different radio access technologies;
making at least one active measurement based, at least in part, on the second wireless connection;
determining whether to change the primary data connection for the apparatus from the first access point to the second access point based, at least in part, on the at least one active measurement; and
in response to determining that the primary data connection for the apparatus should be changed from the first access point to the second access point, releasing the first wireless connection, maintaining or re-establishing the second wireless connection and configuring the second wireless connection as the primary data connection for the apparatus.

In some examples, the first and the second wireless communication interface each are configured to operate using one of the following radio access technologies: wireless local area network, WLAN, associated with the Institute of Electrical and Electronics Engineers, IEEE, 802.11 family of standards, and
a 3^{rd} Generation Partnership Project, 3GPP, cellular radio access technology.

According to various, but not necessarily all, embodiments there is provided an apparatus comprising
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein.

The description of a function and/or action should additionally be considered to also disclose any means suitable for performing that function and/or action. Functions and/or actions described herein can be performed in any suitable way using any suitable method.

The description of a feature, such as an apparatus or a component of an apparatus, for performing a function should additionally be considered to also disclose an apparatus or a component of an apparatus configured to perform the function. Similarly, the description of a feature, such as an apparatus or a component of an apparatus, configured to perform a function should additionally be considered to also disclose an apparatus or a component of an apparatus for performing the function.

According to various, but not necessarily all, embodiments there is provided examples as claimed in the appended claims.

Functions and/or actions can be performed in any suitable way using any suitable method.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example of an apparatus;
FIG. 2 shows an example of modular components of an apparatus;
FIG. 3A shows an example of a scenario;
FIG. 3B shows an example of a scenario;
FIG. 4 shows an example of a method
FIG. 5 shows an example of a method;
FIG. 6A shows an example of a plot;
FIG. 6B shows an example of a plot;
FIGs 7A and 7B show an example of a controller; and
FIGs 8A to 8F show the role of generic routing encapsulation (GRE) in examples of the disclosure.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The FIGs illustrate various examples of an apparatus 10. In some examples the apparatus 10 is a client device in a wireless network, for example a mobile user device 26. In examples, a client device can be a terminal node of a wireless network.

The apparatus 10 is configured to perform handoffs between access points in an improved way. For example, the apparatus 10 is configured to accurately identify when a better connection is available at a different access node, and perform a handoff to the different access node accordingly. As used herein, the term handoff is intended to also include the term handover.

In examples, the apparatus 10 can, while a primary connection is maintained on a first interface, perform a scan and evaluation on a second interface and can hand off redirecting the packet flow once the second interface has reliable connected.

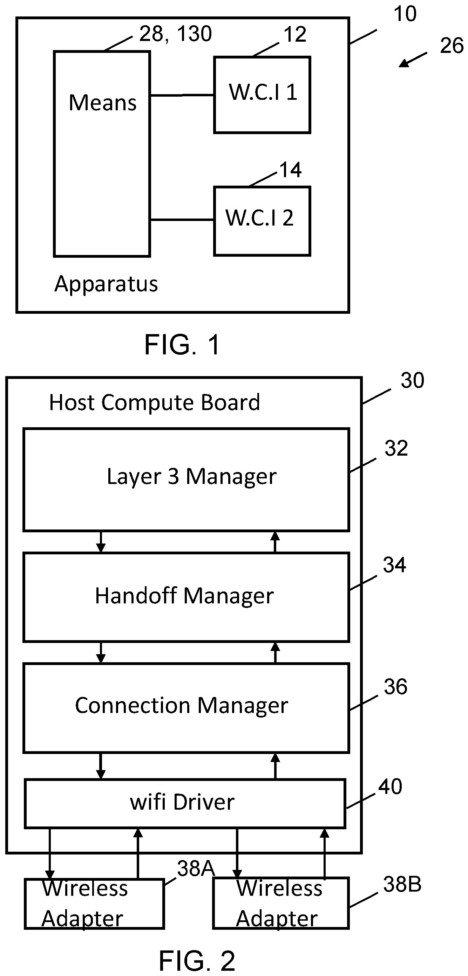

FIG. 1 schematically illustrates an example of an apparatus 10.

One or more of the features discussed in relation to FIG. 1 can be found in one or more of the other FIGs.

In examples, the apparatus 10 is a client device configured to operate in at least one wireless network. In some examples, the apparatus 10 is a mobile user device 26.

In examples, the apparatus 10 comprises at least a first wireless communication interface 12 and a second wireless communication interface 14, and means 28.

The means 28 can comprise means for controlling operation of the apparatus 10. The means 28 can comprise means for processing information.

The means 28 can comprise any suitable means/structure(s)/arrangement(s)/component(s)/circuitry configured to at least one of control operation of the apparatus 10 or process information.

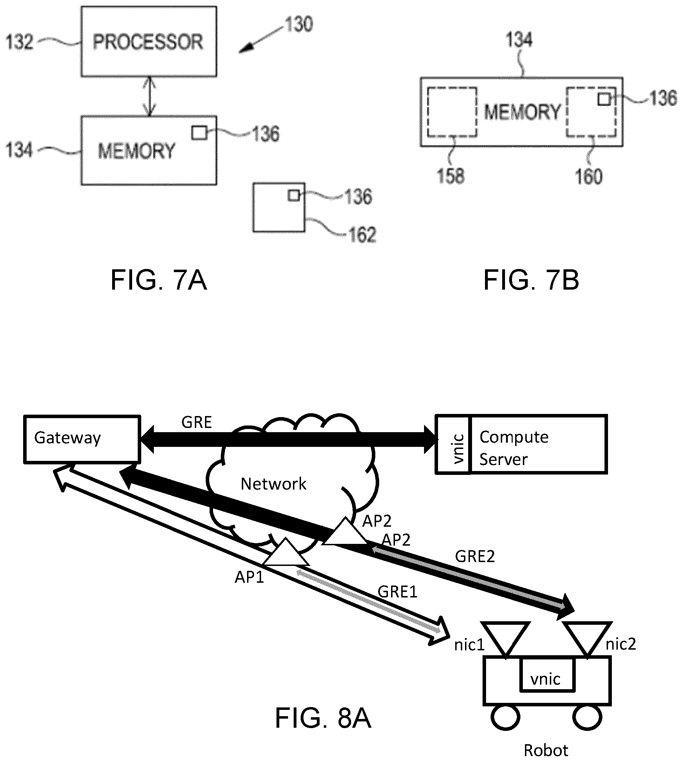

In examples, the means 28 comprise at least one controller 130, for example a controller 130 as described in relation to FIGs 7A and 7B.

In examples, the first and second wireless communication interfaces 12, 14 are configured to create and maintain separate wireless connections with different access points 18.

The first and second wireless communication interfaces 12, 14 can comprise any suitable wireless communication interface or interfaces. In examples, the first and second wireless communication interfaces 12, 14 can be substantially the same type of wireless communication interfaces or can be different types of wireless communication interfaces.

In examples, the first wireless communication interface 12 forms a connection and data for the apparatus 10 flows on the connection. The second wireless interface 14 scans, using tunneling technology to preserve the same internet protocol (IP) address of communicating peers, and when a better connection is found, a connection is established, the tunnel is re-routed, and the roles of the first and second wireless interfaces 12, 14 are swapped.

Accordingly, in examples, the IP address of the apparatus 10 is maintained when primary data connection for the apparatus 10 is changed to a different access point.

In examples, the first and second wireless communication interfaces 12, 14 can comprise at least one of the following: radio modem, adapter, or wireless local area network (WLAN) card associated with the IEEE 802.11 family of standards and so on.

The first and second wireless communication interfaces 12, 14 can be configured to operate in any suitable wireless network or networks using any suitable radio access technology or technologies.

In some examples, the first and second wireless communication interfaces 12, 14 are configured to operate using the same radio access technology or different radio access technology.

In some examples, the first and the second wireless communication interfaces 12, 14 each are configured to operate using one of the following radio access technologies: wireless local area network (WLAN) associated with the Institute of Electrical and Electronics Engineers (IEEE) 802.11 family of standards, and 3^{rd} Generation Partnership Project (3GPP) cellular radio access technology.

Although two wireless communication interfaces 12, 14 are illustrated in the example of FIG. 1, in examples the apparatus 10 can comprise any suitable number of wireless communication interfaces 12, 14.

In some examples, the apparatus 12, 14 comprise 'pairs' of wireless communication interfaces 12, 14 configured to operate using the same radio access technology. For example, the apparatus 10 can comprise a first pair of wireless communication interfaces 12A, 14A configured to operate using a first radio access technology, and a second pair of wireless communication interfaces 12, 14 configured to operate using a second, different radio access technology.

In examples, the means 28 are for establishing a first wireless connection 16A to a first access point 18A using the first wireless communication interface 12, wherein the first wireless connection 16A is configured as a primary data connection 20 for the apparatus 10.

In examples, the first wireless connection 16A is the primary data connection 20 for the apparatus 10 because it is the connection used by the apparatus 10 for communication, that is the primary data connection 20 is used for traffic to and from the network, via the first access point 18A.

Accordingly, in examples, the first wireless connection 16A is used for application traffic for the apparatus and the second wireless communication interface 14 is not used to provide increased/aggregated bandwidth.

In examples, the first wireless connection 16A can be considered a primary data connection 20 for a certain time or period of time. Accordingly, in examples, the first wireless communication connection 16A can be a current or present or temporary primary data connection 20 for the apparatus 10.

In some examples, the first wireless connection 16A/primary data connection 20 can be considered a sole data connection as there are no other wireless connections used for traffic with the network, for example there is no secondary data connection.

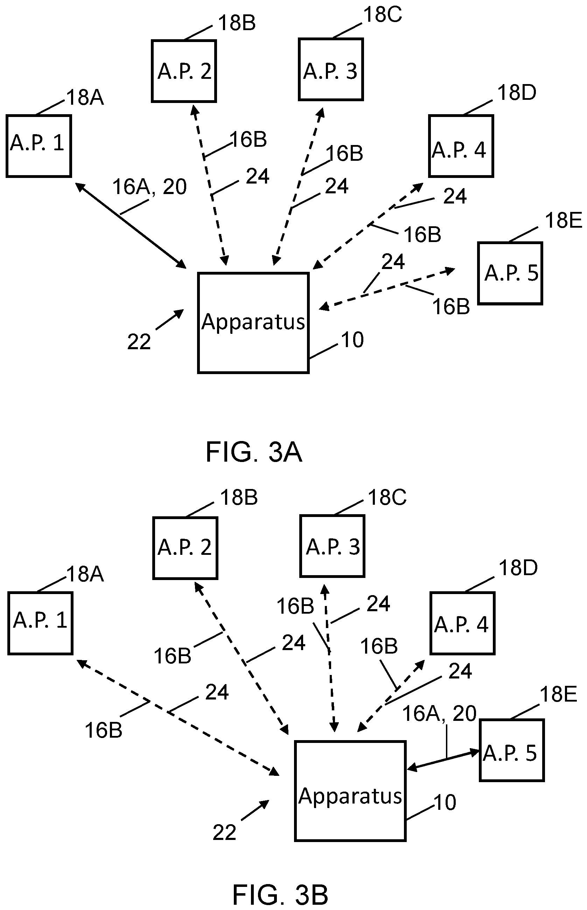

By way of example, reference is made to the example of FIG. 3A.

FIG. 3A schematically illustrates an apparatus 10, which may be the apparatus 10 of the example of FIG. 1, and five access points 18A, 18B, 18C, 18D, 18E within communication range of the apparatus 10.

In the example of FIG. 3A the apparatus 10 has established a first wireless connection 16A/primary data connection 20 to the first access point 18A. The example of FIG. 3A will be discussed further below.

Returning to the discussion of FIG. 1, as noted above, in examples, the first and the second wireless communication interfaces 12, 14 are each configured to operate using one of the following radio access technologies: wireless local area network (WLAN) associated with the Institute of Electrical and Electronics Engineers (IEEE) 802.11 family of standards, and 3^{rd} Generation Partnership Project (3GPP) cellular radio access technology.

Accordingly, the first wireless connection 16A can be made, in examples, using any of these radio access technologies. Below is an example of actions to establish a connection using WLAN associated with the IEEE 802.11 family of standards.

In examples the apparatus 10 has made the decision to connect to a particular access point (for example the first access point 18A), and apparatus 10 has the service set identifier (SSID), basic service set identifier (BSSID), and other parameters to make a wireless connection 16 cached from, for example, a previously executed scan.

In examples, a connection is established and an IP address obtained. Any suitable/standard procedure for establishing the connection can be used.

In examples, connections using 3GPP cellular radio access technology can be established according to at least one 3GPP technical specification.

In examples, the first wireless communication interface 12 connects using any suitable/standard procedure and obtains an IP address.

However, as previously noted, the first and second wireless communication interfaces 12, 14 can be configured to operate in any suitable wireless network or networks using any suitable radio access technology or technologies.

In examples, the means 28 are for determining that at least a second wireless access point 18B is available for connection.

In some examples, determining that at least a second access point 18B is available for connection comprises scanning for signals 24 from at least one available access point 18 using the second wireless communication interface 14.

Using the second wireless communication interface 14 to perform the scanning allows the first wireless communication interface 12 and first wireless connection 16A/primary data connection 20 to remain uninterrupted.

In examples, signals 24 received from available access points 18 can enable the apparatus 10 to determine whether the candidate access point(s) 18 will increase, for example, quality of service (QoS) for the apparatus 10 compared to the established first wireless connection 16A.

For example, if QoS requirements are currently met on the first wireless connection 16A it can be determined with some degree of confidence none of the access points 18 in the scan can improve the QoS.

In examples, the second wireless communication interface 14 is used to evaluate at least one parameter of a variety of parameters to assess the candidate access point(s) 18. Such parameters can be referred to as connection parameters.

In some examples, the second wireless interface is used to evaluate at least one of the following: signal power, signal-to-noise ratio, estimated theoretical throughput of the connection, existing traffic in the access point, the number of already connected stations, and so on.

The second wireless communication interface 14 can evaluate at least one of these metrics during the scan and can try to map the metric(s) to the application-perceived performance indicators, such as, for example, latency, available data rate and so on.

In examples, if the available information indicates that the candidate access point(s) 18 will increase, for example, QoS for the apparatus 10, it can be determined that the candidate access point(s) 18 should be further investigated/assessed.

For example, the second wireless communication interface 14 can be used to evaluate more connection parameters, and/or sound out the connection by sending probe traffic and so on.

Referring again to the example of FIG. 3A, in the illustrated example, the apparatus 10 has received signals 24 from at least a second access point 18B, using the second the second wireless communication interface 14. In some examples, discussed below, the apparatus 10 receives signals 24 from the access points 18B to 18E using the second wireless communication interface 14.

In examples, the apparatus 10 determines based, at least in part, on information received in the signals 24 from the second access point 18B and other available information that the second access point 18B is a good candidate for potentially improving, for example, QoS for the apparatus 10. That is, in examples, the apparatus 10 is able to determine based, at least in part, on information received in the signals 24 from the second access point 18B and other available information that the second access point 18B is a good candidate for providing a better connection than the first access point 16A (the current access point being used by the apparatus 10).

Returning to the discussion of FIG. 1, in examples, the means 28 are for establishing, while the first wireless connection 16A is established, a second wireless connection 16B to the second access point 18B using the second wireless communication interface 14.

In examples, the second wireless connection 16B is a full or complete wireless connection 16.

In examples, the second wireless connection 16B is a wireless connection 16 that is configured to be used as a primary data connection 20. That is, in examples, the second wireless connection 16B is such that it is possible to use the second wireless connection 16B as a primary data connection 20, although the second wireless connection 16B will not, in some examples, be used as a primary data connection 20.

In examples, establishing the second wireless connection 16B can be as described above in relation to establishing the first wireless connection 16A. For example, in some examples, the apparatus 10 uses the second wireless communication interface 14 to authenticate and associate with the second access point 18B, and to obtain an IP address.

In some examples, the second wireless connection 16B is configured to enable the apparatus 10 to determine at least one of throughput or latency of the second wireless connection 16B.

In some examples, the second wireless connection 16B is configured to enable the apparatus 10 to send and receive traffic to use carrier-sense multiple access with collision avoidance (CSMA/CA) used in standard 802.11.

In some examples, the second wireless connection 16B is configured to enable the apparatus 10 to determine at least one of effects path loss, multipath fading, or shadowing of the second wireless connection 16B.

In some examples, the second wireless connection 16B is configured to enable the apparatus 10 to observe link speed achieved in reception and transmission to get a measure of the maximum theoretical bandwidth of the second wireless connection 16B.

In examples, the means 28 are for making at least one active measurement 22 based, at least in part, on the second wireless connection 16B.

In some examples, the means 28 are for making at least one active measurement 22 using the second wireless connection 16B.

The at least one active measurement 22 can comprise any suitable measurement that can be made based, at least in part, on the second wireless connection 16B. For example, the at least one active measurement 22 can comprise any suitable measurement that can be made using the second wireless connection 16B.

In some examples, making at least one active measurement 22 based, at least in part, on the second wireless connection 16B comprises at least one of:
measuring at least one rate control algorithm metric;
sending internal control message protocol, ICMP, echo packets to an endpoint of interest and measuring loss and/or round-trip time, RTT, between ICMP echo-reply packet received as response and a related ICMP echo packet;
establishing a transmission control protocol, TCP, connection and measuring throughput;
establishing a TCP connection and measuring at least one TCP metric;
measuring the size of the maximum transmission unit, MTU, on the second wireless connection;
measuring the loss of a user datagram protocol, UDP, stream to an endpoint of interest;
tracking the lower layer retransmissions on a physical WLAN link associated with the Institute of Electrical and Electronics Engineers, IEEE, 802.11 family of standards.

For example, the apparatus 10 can make use of the rate control algorithm (RCA) in relation to the second wireless connection 16B.

The rate control algorithm (RCA) is responsible for adjusting physical layer (PHY) and medium access control (MAC) layer parameters in response to changing channel conditions.

In examples, the decisions made by the RCA ultimately decide the maximum theoretical throughput achievable by a client. This data rate reported by the RCA can be considered an all encompassing measure of instantaneous performance of the second wireless connection 16B, and thus can be a valuable metric for use in determining whether or not to perform a handoff.

The metric can only be calculated after an apparatus 10 establishes a wireless connection 16 to an access point 18. Furthermore, the metric only converges to its true value after traffic has been sent / received on the wireless connection 16.

In examples, the at least one active measurement 22 comprises at least one measurement to enable the apparatus 10 to characterize the quality of the second wireless connection 16B using the second wireless connection 16B.

In examples, making at least one active measurement 22 based, at least in part, on the second wireless connection 16B comprises transmitting and/or receiving information using the second wireless connection 16B.

Any suitable information can be used. For example, any suitable information to enable the apparatus 10 to assess the quality of second wireless connection 16B can be used.

In examples, the information can range from single packets up to test traffic such as short video sequences. In some examples, the information is configured to duplicate the traffic on the first wireless connection 16A. For example, the information can comprise duplicated traffic of the first wireless connection 16A that would be accommodated by the second wireless connection 16B if the second wireless connection 16B were to become the primary data connection 20 of the apparatus 10 instead of the first wireless connection 16A.

In some examples, the at least one active measurement 22 comprises at least one measurement to enable the apparatus 10 to determine at least one of throughput or latency of the second wireless connection 16B.

In some examples, the at least one active measurement 22 characterizes the latency (for example sending a ping).

In some examples, the at least one active measurement 22 characterizes the throughput (for example iperf-like test).

In some examples, the at least one active measurement 22 comprises sending and receiving traffic to characterize how carrier-sense multiple access with collision avoidance (CSMA/CA) used in standard 802.11 is performed.

In examples, the at least one active measurement 22 comprises at least one measurement to enable the apparatus 10 to observe link speed achieved in reception and transmission to get a measure of the maximum theoretical bandwidth of the second wireless connection 16B.

Therefore, in examples, in order to make a direct comparison of, for example, this metric between the first wireless connection 16A of the first access point 18A (which can be referred to as an active access point) and the second wireless connection 16B of the second access point 18B (which can be referred to as a candidate AP), the second wireless communication interface 14 takes an active role while evaluating candidate access points 18.

By way of example, reference is again made to the example of FIG. 3A.

In the example of FIG. 3A, the apparatus 10 makes at least one active measurement 22 based, at least in part, on the second wireless connection 16B established with the second access point 18B. For example, the apparatus makes at least one active measurement 22 using the second wireless connection 16B.

Referring again to the example of FIG.1, in examples the means 28 are for determining whether to change the primary data connection 20 for the apparatus 10 from the first access point 18A to the second access point 18B based, at least in part, on the at least one active measurement 22.

In examples, the means 28 are for determining whether to change the primary data connection 20 for the apparatus 10 comprises determining whether the second wireless connection 16B would serve better as a primary data connection 20 than the first wireless connection 16A. For example, determining whether to change the primary data connection 20 for the apparatus 10 comprises determining whether the quality of the second wireless connection 16B is better than the quality of the first wireless connection 16A.

In some examples, determining whether to change the primary data connection 20 for the apparatus 10 comprises determining whether the second wireless connection 16B is capable of reliably supporting, or better supporting, the current bitrate of application data that is currently present on the first wireless connection 16A.

In some examples, determining whether to change the primary data connection 20 for the apparatus 10 comprises comparing the at least one active measurement 22 based, at least in part, on the second wireless connection 16B and at least one corresponding active measurement 22 based, at least in part, on the first wireless connection 16A.

For example, the apparatus 10 can compare result(s) of active measurement(s) 22 made using the second wireless connection 16B with result(s) of the same active measurements made using the first wireless connection 16A.

In some examples, comparing the at least one active measurement 22 based, at least in part, on the second wireless connection 16B and at least one corresponding active measurement 22 based, at least in part, on the first wireless connection 16B comprises using a threshold to prevent repeated connection changes between the first access point 18A and the second access point 18B.

The threshold can indicate by how much the first and second wireless connections 16A, 16B have to differ before a change of primary data connection 20 is triggered. For example, the threshold can indicate by how much the quality of the second wireless connection 16B is to be better than the quality of the first wireless connection 16A before a change of primary data connection 20 is initiated.

For example, the threshold can represent an amount by how much an active measurement 22 using the second wireless connection 16B is to differ from the active measurement 22 using the first wireless connection 16A to initiate a change of primary data connection 20.

In examples, different thresholds can be used in relation to different active measurements 22.

Any suitable threshold or thresholds can be used.

In examples, appropriate threshold values are chosen when making comparisons between measurements to provide a suitable level of hysteresis.

In some examples, the means 28 are configured to determine that the first wireless connection 16A is degrading or is going to degrade, and wherein determining whether to change the primary data connection 20 for the apparatus 10 from the first access point 18A to the second access point 18B is based, at least in part, on determining that the first wireless connection is degrading or is going to degrade. In some examples, if it is determined that the first wireless connection 18A is not degrading or is not going to degrade, the apparatus 10 will determine to maintain the current primary data connection 20.

For example, the apparatus 10 can determine that the second access point 18B can provide better QoS than the currently used first access point 18A, but that the QoS provided by the first access point 18A is still sufficient and therefore determines that no change of access points is needed.

In examples, the means 28 are for, in response to determining that the primary data connection 20 for the apparatus 10 should be changed from the first access point 18A to the second access point 18B, releasing the first wireless connection 16A, maintaining or re-establishing the second wireless connection 16B and configuring the second wireless connection 16B as the primary data connection 20 for the apparatus 10.

Consequently FIG. 1 illustrates an apparatus 10 comprising:
at least a first wireless communication interface 12 and a second wireless communication interface 14, wherein the first and second wireless communication interfaces 12, 14 are configured to create and maintain separate wireless connections 16 with different access points 18, and wherein the first and second wireless communication interfaces 12, 14 are configured to operate using the same radio access technology or different radio access technologies; and
means 28 for:
establishing a first wireless connection 16A to a first access point 18A using the first wireless communication interface 12, wherein the first wireless connection 16A is configured as a primary data connection 20 for the apparatus 10;
determining that at least a second access point 18B is available for connection;
establishing, while the first wireless connection 16A is established, a second wireless connection 16B to the second access point 18B using the second wireless communication interface 14;
making at least one active measurement 22 based, at least in part, on the second wireless connection 16B;
determining whether to change the primary data connection 20 for the apparatus 10 from the first access point 18A to the second access point 18B based, at least in part, on the at least one active measurement 22; and
in response to determining that the primary data connection 20 for the apparatus 10 should be changed from the first access point 18A to the second access point 18B, releasing the first wireless connection 16A, maintaining or re-establishing the second wireless connection 16B and configuring the second wireless connection 16B as the primary data connection 20 for the apparatus 10.

In examples, the first wireless connection 16A is released so that there is no longer a wireless connection 16 between the apparatus 10 and the first access point 18A.

This means that, in examples, the second wireless connection 16B becomes the primary data connection 20 for the apparatus 10 and is therefore used for application traffic with network.

The first wireless connection 16A is released, and therefore, in examples, the second wireless connection 16B becomes the sole connection used by the apparatus 10 for traffic with the network, and there is no aggregation of bandwidth using the first wireless communication interface 12 and the second wireless communication interface 14 in combination.

For example, in the example of FIG. 3A, the second wireless connection 16B can be configured as the primary data connection 20 for the apparatus 10 and the first wireless connection 16A can be released.

In some examples, a plurality of different access points 18 are available to the apparatus 10 and therefore the second wireless communication interface 14 can be used to actively test the different available access points 18 before the apparatus 10 determines which access point 18 should be used for the primary data connection 20 for the apparatus 10 and therefore if a change of access point 18 should be made with regard to the primary data connection 20 for the apparatus 10.

Accordingly, in some examples, the access point 18 to which the second wireless communication interface 14 currently has a wireless connection 16 is determined to be used for the primary data connection 20 for the apparatus 10 and the apparatus 10 maintains that wireless connection 16 and configures that wireless connection 16 as the primary data connection 20 for the apparatus 10, while releasing the wireless connection 16 previously configured as the primary data connection 20 for the apparatus 10.

However, in some examples, an access point 18 that was previously tested using the second wireless communication interface 14 is determined to be used for the primary data connection 20 for the apparatus 10 and the apparatus 10 re-establishes a wireless connection 16 with the previously tested access point 18 and configures that wireless connection as the primary data connection 20 for the apparatus 10, while releasing the wireless connection 16 previously configured as the primary data connection 20 for the apparatus 10.

In some examples, determining that at least a second access point 18B is available for connection comprises determining that a plurality of access points 18B, 18C, 18D, 18E is available for connection, and wherein the means 28 are configured to:
establish in turn, while the first wireless connection 16A is established, a second wireless connection 16B to a plurality of access points 18B, 18C, 18D, 18E available for connection using the second wireless communication interface 14;
make at least one active measurement 22 for each of the plurality of access points 18B, 18C, 18D, 18E to which a second wireless connection 16B is made based, at least in part, on the second wireless connection 16B with each of the plurality of access points 18B, 18C, 18D, 18E;
determine whether to change the primary data connection 23 for the apparatus 10 from the first access point 18A to another access point 18 based, at least in part, on the at least one active measurement 22 made for each of the plurality of access points 18B, 18C, 18D, 18E to which a second wireless connection 16B is made; and
in response to determining that the primary data connection 20 for the apparatus 10 should be changed from the first access point 18A to another access point 18, release the first wireless connection 16A, maintain or re-establish the second wireless connection with the another access point 18 and configure the second wireless connection with the another access point 18 as the primary data connection 20 for the apparatus 10.

Accordingly, in examples, the process described herein in relation to testing the second wireless connection 16B can be performed a plurality of times with a second wireless connection 16B being made with a plurality of different access points 18 in turn. This enables, for example, the apparatus 10 to actively test a plurality of different access points 18 using the second wireless communication interface 14 to determine whether any of the access points 18 can better serve the apparatus 10, and without affecting the primary data connection 20 for the apparatus 10 that is established with a first access point 16A.

By way of example, reference is made to the examples of FIGs 3A and 3B.

In the example of FIG. 3A, the apparatus 10 established, while the first wireless connection 16A is established, a second wireless connection 16B to each of the access points 18B, 18C, 18D, and 18E in turn and makes at least one active measurement 22 using the second wireless connection 16B established with each of the access points 18B, 18C, 18D, 18E.

Accordingly, each of the access points 18B, 18C, 18D, 18E can, in turn, be considered the second access point that is being tested.

FIG. 3B is similar to the example of FIG. 3A. However, in the example of FIG. 3B the apparatus 10 has moved away from access point 18A and towards access point 18E.

In the example of FIG. 3B, the apparatus has used the second wireless communication interface 14 to test the access point 18E as described herein and has determined that wireless connection 16 with the access point 18E should be configured and used as the primary data connection 20 for the apparatus 10.

Therefore, in the example of FIG. 3A, the wireless connection 16 with the access point 18E is indicated as the first wireless connection 16A and is configured as the primary data connection 20 for the apparatus 10, and the wireless connection 16 with the access point 18A has been released.

In examples, the means 28 are configured to: after the wireless connection 16 has been released, swap the roles of the first wireless communication interface 12 and second wireless communication interface 14.

That is, in examples, when the wireless connection 16 established using the second wireless communication interface 14 is configured as the primary data connection 20 for the apparatus 10, the wireless connection 16 established using the first wireless communication interface 12 is released and therefore the first wireless communication interface 12 is free to be used to test and assess potential access points 18 as was previously done using the second wireless communication interface 14.

In examples, the hardware and software that was previously referred to as the second wireless communication interface 14 effectively becomes the first wireless communication interface 12 and the hardware and software that was previously referred to as the first wireless communication interface 12 effectively becomes the second wireless communication interface 14.

This enables the apparatus 10 to continue to discover and actively test/assess alternative access points 18 for potential connection without disturbing the primary data connection 20 for the apparatus 10.

This enables the apparatus 10 to effectively determine when to perform handoff to another access point 18 without disturbing the primary data connection 20 for the apparatus 10.

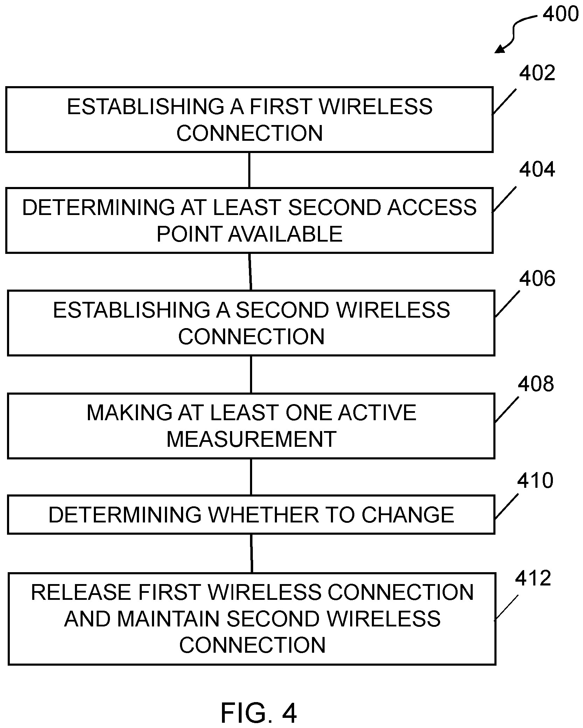

FIG. 4 illustrates an example of a method 400. In this example, but not necessarily all examples, method 400 is a method of performing a handoff.

Method 400 can be performed by any suitable apparatus 10 comprising any suitable means. For example, method 400 can be performed by an apparatus 10 of FIG. 1.

At block 402, method 400 comprises establishing a first wireless connection16A to a first access point 18A using a first wireless communication interface 12 of an apparatus 10, wherein the first wireless connection 16A is configured as a primary data connection 20 for the apparatus 10.

At block 404, method 400 comprises determining that at least a second access point 18B is available for connection.

At block 406, method 400 comprises establishing, while the first wireless connection 16A is established, a second wireless connection 16B to the second access point 18B using a second wireless communication interface 14 of the apparatus 10, wherein the first and second wireless communication interfaces 12, 14 are configured to create and maintain separate wireless connections 16 with different access points 18, and wherein the first and second wireless communication interfaces 12, 14 are configured to operate using the same radio access technology or different radio access technologies.

At block 408, method 400 comprises making at least one active measurement 22 based, at least in part, on the second wireless connection 16B.

At block 410, method 400 comprises determining whether to change the primary data connection 20 for the apparatus 10 from the first access point 18A to the second access point 18B based, at least in part, on the at least one active measurement 22.

At block 412, method 400 comprises in response to determining that the primary data connection 20 for the apparatus 10 should be changed from the first access point 18A to the second access point 18B, releasing the first wireless connection 16A, maintaining or re-establishing the second wireless connection 18B and configuring the second wireless connection 18B as the primary data connection 20 for the apparatus 10.

Consequently, FIG. 4 illustrates a method 400 comprising:
establishing a first wireless connection16A to a first access point 18A using a first wireless communication interface 12 of an apparatus 10, wherein the first wireless connection 16A is configured as a primary data connection 20 for the apparatus 10;
determining that at least a second access point 18B is available for connection;
establishing, while the first wireless connection 16A is established, a second wireless connection 16B to the second access point 18B using a second wireless communication interface 14 of the apparatus 10, wherein the first and second wireless communication interfaces 12, 14 are configured to create and maintain separate wireless connections 16 with different access points 18, and wherein the first and second wireless communication interfaces 12, 14 are configured to operate using the same radio access technology or different radio access technologies;
making at least one active measurement 22 based, at least in part, on the second wireless connection 16B;
determining whether to change the primary data connection 20 for the apparatus 10 from the first access point 18A to the second access point 18B based, at least in part, on the at least one active measurement 22; and
in response to determining that the primary data connection 20 for the apparatus 10 should be changed from the first access point 18A to the second access point 18B, releasing the first wireless connection 16A, maintaining or re-establishing the second wireless connection 18B and configuring the second wireless connection 18B as the primary data connection 20 for the apparatus 10.

In examples, method 400 comprises maintaining address continuity when the primary data connection 20 for the apparatus 10 is changed from the first access point 18A to the second access point 18B.

In some examples, maintaining address continuity comprises maintaining the IP address of the apparatus 10 when the primary data connection 20 for the apparatus 10 is changed from the first access point 18A to the second access point 18B.

Maintaining the IP address of the apparatus 10 can be performed in any suitable way using any suitable method. For example, any suitable protocol and/or encapsulation method can be used to maintain address continuity.

In some examples, generic routing encapsulation (GRE) tunnels are used to maintain address continuity. In examples, GRE tunnels are used to maintain address and flow continuity.

In some examples, the apparatus 10 establishes a first GRE tunnel via the first access point for use while the first wireless connection is configured as a primary data connection for the apparatus, establishes a second GRE tunnel via the second access point, based at least in part on configuring the second wireless connection as the primary data connection for the apparatus, and switches the data flow from the first GRE tunnel to the second GRE tunnel.

This allows, for example, address and flow continuity to be maintained.

In examples, to evaluate whether a two-interface apparatus 10 should execute a handoff to an available access point 18, it:
Authenticates and associates with the candidate access point 18, and obtains an IP address

Performs one or many of the possible active tests to measure the quality of the link, for example, at least one of:
i. Sends ICMP packets to an endpoint of interest to evaluate the latency
ii. Establishes a TCP connection and measures either the maximum throughput achieved, or verifies that a minimum throughput is achievable, all while tracking TCP metrics like window size and retransmissions
iii. Measures the size of the MTU on the link
iv. Measures the loss of a UDP stream to an endpoint of interest
v. Tracks the lower layer retransmissions on the physical wifi link
vi. Measures the TX/ RX link speed achieved by the RCA, and characterizes any fluctuations

Wireless local area network, WLAN, associated with the Institute of Electrical and Electronics Engineers, IEEE, 802.11 family of standards can comprise wifi. For example, a wifi link can be considered a WLAN link associated with the IEEE 802.11 family of standards.

After measurements are complete, compares the results with the same measurements performed on the active connection.

If the candidate connection is deemed to be better, a handoff is executed.

FIG. 2 illustrates an example of modular components of an apparatus 10.

In the example of FIG. 2, the apparatus 10 comprises seven modular components as shown.

In examples, the basic hardware requirements are a host compute board 30 and two wireless adapters 38A, 38B, for example wifi adapters. There is no restriction on form factor - it can be a circuit board with PCIe x1 wifi adapters, a circuit board with M.2 wifi adapters, or a single board computer with wifi chipsets soldered on the board.

In examples, examples of the disclosure are useful for highly mobile clients.

In examples, the software implementation has three logical components, shown in the diagram as boxes 32, 34, 36. At a high level, the connection manager 36 is needed to communicate with the wifi driver 40, initiate and maintain authentication and association with access points 18, and abstract the capabilities of different wifi adapters into a common interface.

In examples, the handoff manager 34 interacts with the connection manager 36 to request and monitor signal quality measurements, and instructs the connection manager 36 to connect and disconnect to different access points 18 when certain conditions are met.

In examples, the layer 3 manager 32 provisions addressing and routing, and emits a ready signal when once the new connection is ready to transmit and receive.

Depending on the types active tests that are to be performed to characterize candidate access points 18, there may be additional software modules running on the host compute board 30 that are responsible for executing and reporting the outcomes of the tests to the handoff manager 34.

In examples, if a handoff to the candidate wireless connection 16 is favorable, the handoff manager 34 notifies the layer 3 manager 32 to redirect traffic over the new wireless connection 16.

In some example configurations, use wpa_supplicant is used as the connection manager 36. wpa_supplicant is a free, open-source, cross-platform wifi protected access (WPA) supplicant for wifi clients.

In examples, wpa_supplicant can be used as-is without modifications to the source.

In some examples, all configuration, including disabling undesired features and storing network SSIDs, pre-shared keys (PSKs), and so on, is done from a single configuration file which is ingested when the wpa_supplicant software starts.

In some examples, the code that implements examples of the disclosure interacts with wpa_supplicant programmatically (as opposed to, for example, using wpa_supplicant from command shell with a human in the loop) and therefore the whole process is fully automated.

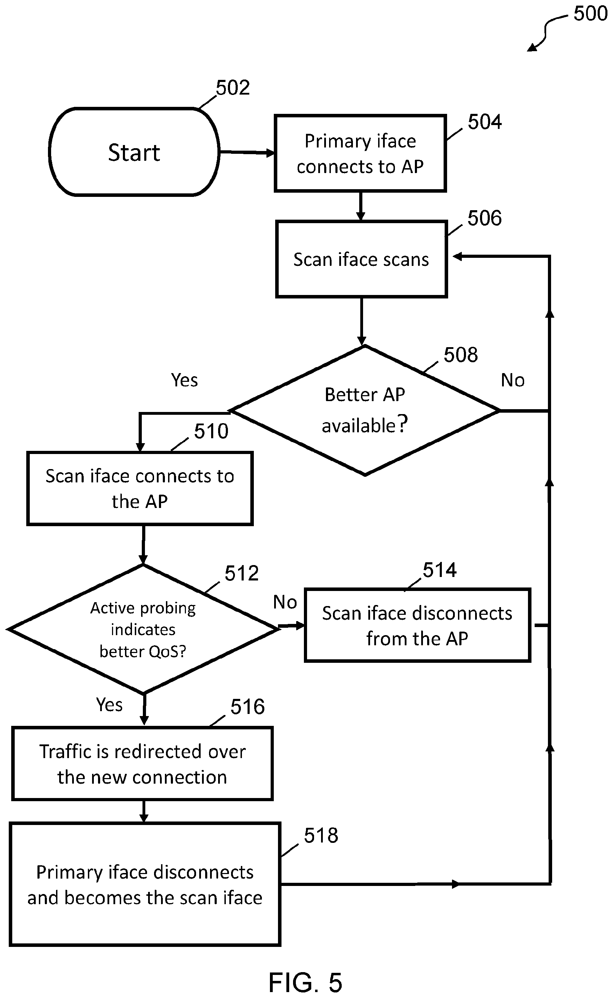

The state transition diagram of the handoff manager is shown in the example of FIG. 5.

In the example of FIG. 5, the steady state is represented as the loop from block 508 to block 506 and from block 514 to block 506.

In the illustrated example, in the steady state, the second wireless communication interface 14, which can be referred to as a scan interface, scans all wireless channels, and produces a list of all access points 18 within range.

In examples, if QoS requirements are currently met on the active connection, and it can be stated with some degree of confidence that none of the access points 18 in the scan can improve the QoS (block 508), the handoff manager immediately instructs the scan interface to begin a new scan (block 506).

In examples, scans are only triggered by the handoff manager 34. This enables a wireless scan to never be triggered on the first wireless communication interface 12, which can be referred to as an active interface, thus eliminating the issue of decreased network performance that is otherwise unavoidable on a single interface setup.

In examples, the frequency of the steady state loop is determined by the capabilities of the wireless adapter. Some adapters can execute the steady state loop at a frequency greater then 1Hz. Other adapters adapters can take an order of magnitude longer.

Examples of the disclosure use two independent wireless communication interfaces 12, 14 per client. Examples of the disclosure provide a novel and beneficial approach to answering the question of when a client should initiate a handoff.

In examples, by introducing a second wireless communication interface to the client, it is possible to offload the scan, authentication, and association functionality to the second wireless communication interface while the first wireless communication interface remains uninterrupted.

Additionally, in examples, the second wireless communication interface may establish a connection with a candidate access point 18 before a handoff is executed for the purpose of actively evaluating the quality of the connection.

In examples, after the second wireless communication interface connects to a new access point 18 and performs its evaluation, the handoff is executed by redirecting traffic over the new connection.

In examples, then the wireless communication interfaces swap roles, and the old first wireless communication interface becomes the new second wireless communication interface.

In examples, this handoff process eliminates the latency and loss that is inevitable when using a single wireless communication interface. In examples, scanning is no longer a disruptive operation, allowing the client to scan continuously and make handoff determinations at a higher rate.

In examples, before establishing a connection, a client is able to measure the received signal strength indicator (RSSI) and signal-to-noise ratio (SNR) of beacon frames received by an access point. In examples, those beacon frames might report some statistics about the channel utilization and number of associated clients in the candidate basic service set (BSS), or, in examples, the client might be able to calculate some of these statistics on its own.

However, in examples, even with all of this information combined, the question "what will the real throughput be after a handoff to the candidate access point" remains unanswered. In examples, the throughput and latency experienced by a client after it connects and begins to send and receive traffic over the link can only be known a posteriori due to the, for example, CSMA/CA protocol used in 802.11, as well as the effects path loss, multipath fading, and shadowing.

In examples, after establishing a connection to a candidate access point 18, the client is able to characterize the quality of the link in ways that are fundamentally not possible otherwise. For example, the client might send ICMP requests over the candidate access point 18 to an endpoint of interest to measure the latency.

For example, the client might initiate a TCP connection to an endpoint of interest and evaluate whether some minimum bandwidth is achievable.

For example, the client might track the retransmissions experienced on various layers of the OSI stack.

In examples, only after the connection is established, the client can observe the link speed achieved in the RX and TX direction to get an immediate measure of the maximum theoretical achievable bandwidth of the wireless link.

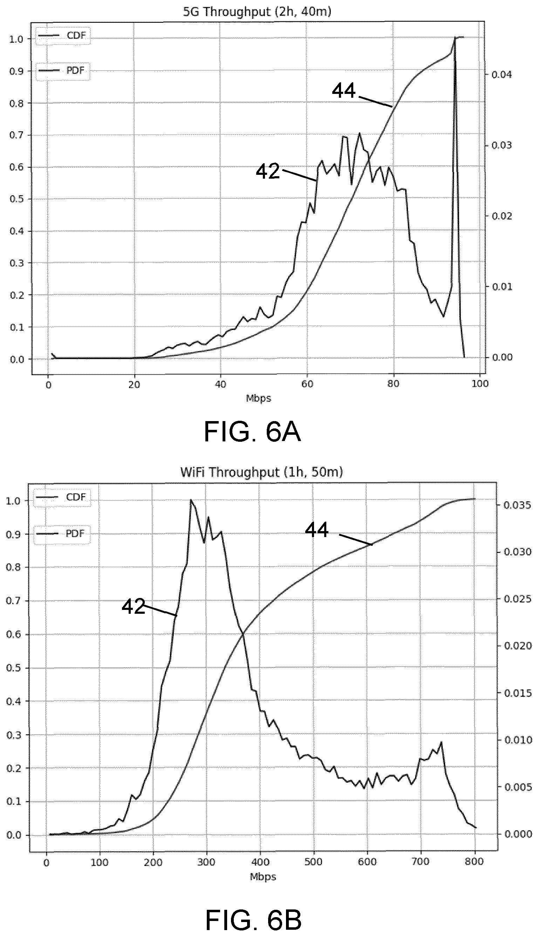

FIGs 6A and 6B show an example comparison of throughputs over 5G and WLAN links in terms of PDF (probability density function) 42 and CDF (cumulative distribution function), measured in a period of 2 hours and 40 minutes (for 5G) (FIG. 6A) and a period of 1 hour and 50 minutes (for WLAN) (FIG. 6B).

As can be seen from the data in FIGs 6A and 6B the WLAN infrastructure using examples of the disclosure, outperforms the 5G infrastructure in latency and throughput both on the uplink and downlink.

In examples, address continuity of an apparatus is maintained as the apparatus switches primary data connection from one access point to a different access point. Accordingly, in examples, an IP address of an apparatus, such as a robot, is maintained as the primary data connection of the apparatus is switched from a first access point to a second access point.

In examples, the same IP address is exposed to an apparatus, such as a robot, as the apparatus switches from one access point to another access point.

Any suitable protocol and/or encapsulation method can be used to maintain address continuity. In some examples GRE is used to maintain address continuity. By way of example, reference is made to the example of FIGs 8A to 8F.

FIGs 8A to 8F show the role of generic routing encapsulation (GRE) in some, but not necessarily all, examples of the disclosure.

FIG. 8A shows the role of GRE tunnels in examples of the disclosure.

GRE tunnel is described, for example, in IETF RFC 2784 and IETF RFC 1701. In a nutshell, it specified encapsulating an IP packet inside another IP packet. The outer packet carries an IP address that is used to route the packet through the network.

The inner IP address defines a "virtual" network that is overlaid on the top of the physical network. In the example of FIG. 8A there are three tunnels, two connecting an apparatus in the form of a robot with the gateway and one connecting the compute server with the gateway. The gateway strips down the outer IP header from a received packet, routes the packet based on the inner IP header and, when sending the packet out, puts back an outer header on the packet and lets the underlying physical network route the packet based on the outer header.

To the robot and to the compute server the IP addresses of virtual network interface are visible. It's a completely separate and independent address space. In the example of FIG. 8A there are two tunnels from the robot to the gateway. This represents the two wireless connections. It can be decided to send data over one or another connection, the data will land in a different tunnel, but the robot will be oblivious to over which connection the data are flowing. The robot will still see the same IP address of virtual NICs on the compute server and of its own virtual network interface card (VNIC).

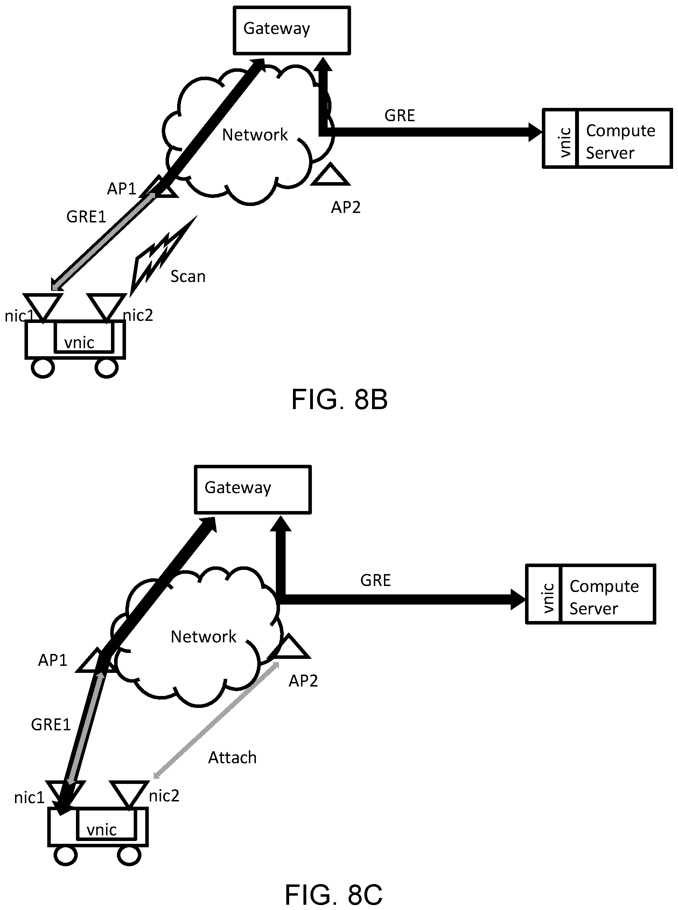

FIGs 8B to 8F are examples that illustrates how GRE tunnels can be used in conjunction with examples of the disclosure described herein. The solid black arrows represent the tunnel over which the data are flowing and the non-filled arrow is an established tunnel but the rules are set such that no data are being sent over it.

FIG. 8B shows the state in which one network interface is connected to the AP and there is a GRE tunnel established. The communication goes over that interface, and the robot and server that the robot talks to are using the overlay IP address (inner addresses) to address each other. Meanwhile the second card NIC2 is scanning for the better AP.

In FIG. 8C, NIC2 has identified a candidate and connected to it but there is no tunnel associated with it. At this point the robot can perform any suitable probing and testing, as described herein, to decide whether the new connection is really better.

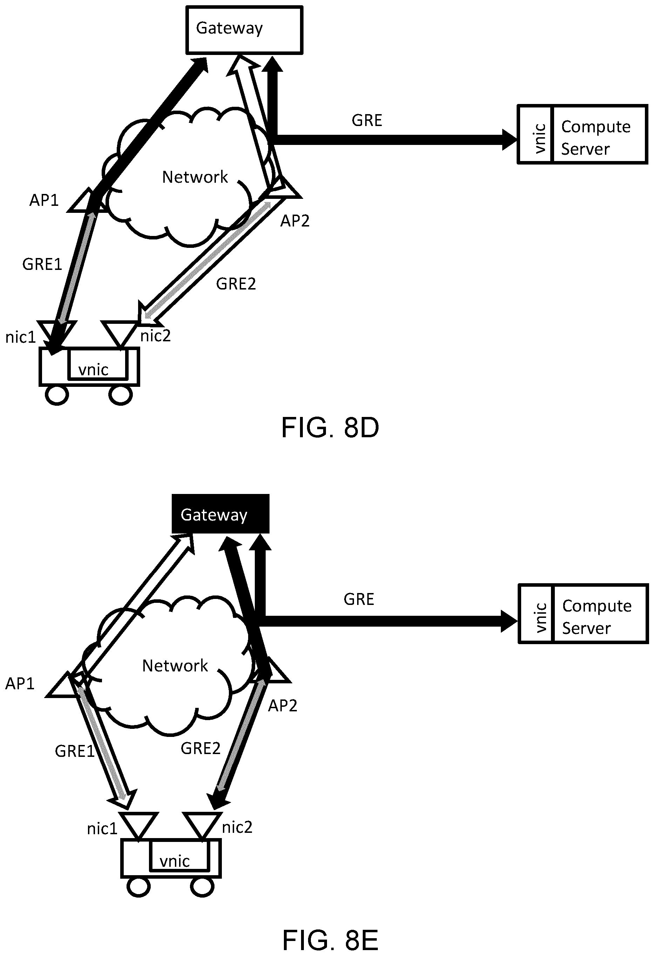

Assuming that it is indeed better, a GRE tunnel is created (FIG. 8D), so now both interfaces can communicate over the overlay network but the rules on the robot and the gateway are still set such that the first interface is used. However, everything is ready to go and perform the handoff and the system knows that the performance will improve once data is redirected to the new tunnel.

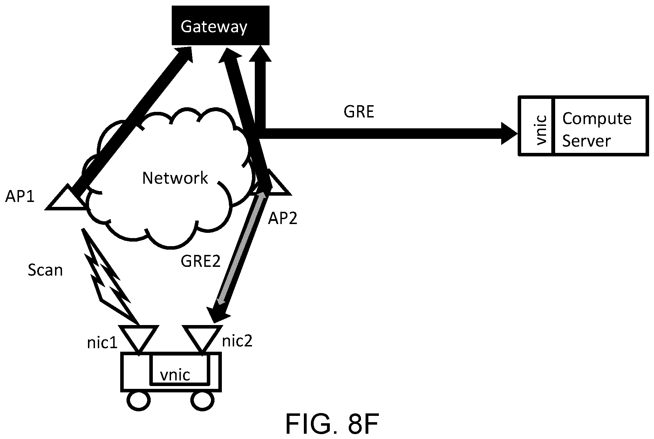

In FIG. 8E, the rules have been changed such that the data are being sent over the second tunnel (this is indicated by the change in solid and non-filled arrows). The first tunnel still exists but it's inactive. In FIG. 8F, the first tunnel has been torn down and the NIC1 is now a scan card looking for better APS, while the NIC2 is an active card. The process repeats afterwards, swapping the roles of NICs as described in examples of the disclosure.

Examples of the disclosure are advantageous and provide technical benefits.

For example, examples of the disclosure achieves the kind of mobility on wifi that is normally seem on cellular networks.

For example, examples of the disclosure allows for heterogeneous handoffs between wifi and cellular network that makes seemingly feel that the mobility is the same as if it is operating on the cellular network but taking advantage of the wifi network (local high-bandwidth deployment).

For example, examples of the disclosure provide for a client apparatus to assess the quality of connections to other access points without affecting the primary data connection for the apparatus.

For example, examples of the disclosure provide for a client apparatus to accurately determine when a handoff to a new access point should be performed.

For example, examples of the disclosure provide for the roles of two wireless communication interfaces to be swapped as appropriate to enable a good primary data connection for the apparatus as, for example, the apparatus moves, while enabling the apparatus to continue to discover and assess potential new access points.

FIGs 7A and 7B illustrate an example of a controller 130 suitable for use in an apparatus 10. For example, the controller can be a controller of an apparatus 10 as described herein.

Implementation of a controller 130 may be as controller circuitry. The controller 130 may be implemented in hardware alone, have certain aspects in software including firmware alone or can be a combination of hardware and software (including firmware).

As illustrated in Figs 7A and 7B the controller 130 may be implemented using instructions that enable hardware functionality, for example, by using executable instructions of a computer program 136 in a general-purpose or special-purpose processor 132 that may be stored on a computer readable storage medium (disk, memory etc.) to be executed by such a processor 132.

The processor 132 is configured to read from and write to the memory 134. The processor 132 may also comprise an output interface via which data and/or commands are output by the processor 132 and an input interface via which data and/or commands are input to the processor 132.

The memory 134 stores instructions, program, or code 136 that controls the operation of the apparatus 130 when loaded into the processor 132. The computer program instructions, program or code 136, provide the logic and routines that enables the apparatus 130 to perform the methods illustrated in the accompanying FIGs. The processor 132 by reading the memory 134 is configured to load and execute the instructions, program, or code 136.

The apparatus 10 comprises:
at least one processor 132; and
at least one memory 134 storing instructions that, when executed by the at least one processor 132, cause the apparatus at least to:
   establish a first wireless connection16A to a first access point 18A using a first wireless communication interface 12 of an apparatus 10, wherein the first wireless connection 16A is configured as a primary data connection 20 for the apparatus 10;
   determine that at least a second access point 18B is available for connection;
   establish, while the first wireless connection 16A is established, a second wireless connection 16B to the second access point 18B using a second wireless communication interface 14 of the apparatus 10, wherein the first and second wireless communication interfaces 12, 14 are configured to create and maintain separate wireless connections 16 with different access points 18, and wherein the first and second wireless communication interfaces 12, 14 are configured to operate using the same radio access technology or different radio access technologies;
   making at least one active measurement 22 based, at least in part, on the second wireless connection 16B;
   determine whether to change the primary data connection 20 for the apparatus 10 from the first access point 18A to the second access point 18B based, at least in part, on the at least one active measurement 22; and
   in response to determining that the primary data connection 20 for the apparatus 10 should be changed from the first access point 18A to the second access point 18B, release the first wireless connection 16A, maintain or re-establish the second wireless connection 18B and configure the second wireless connection 18B as the primary data connection 20 for the apparatus 10.

As illustrated in Figs 7A and 7B, the instructions, program, or code 136 may arrive at the apparatus 130 via any suitable delivery mechanism 162. The delivery mechanism 162 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 136. The delivery mechanism may be a signal configured to reliably transfer the computer program 136. The apparatus 130 may propagate or transmit the computer program 136 as a computer data signal.

The term "non-transitory" as used herein, is a limitation of the medium itself (i.e., tangible, not a signal ) as opposed to a limitation on data storage persistency (e.g., RAM vs. ROM).

Computer program instructions for causing an apparatus to perform at least the following or for performing at least the following:
establishing a first wireless connection16A to a first access point 18A using a first wireless communication interface 12 of an apparatus 10, wherein the first wireless connection 16A is configured as a primary data connection 20 for the apparatus 10;
determining that at least a second access point 18B is available for connection;
establishing, while the first wireless connection 16A is established, a second wireless connection 16B to the second access point 18B using a second wireless communication interface 14 of the apparatus 10, wherein the first and second wireless communication interfaces 12, 14 are configured to create and maintain separate wireless connections 16 with different access points 18, and wherein the first and second wireless communication interfaces 12, 14 are configured to operate using the same radio access technology or different radio access technologies;
making at least one active measurement 22 based, at least in part, on the second wireless connection 16B;
determining whether to change the primary data connection 20 for the apparatus 10 from the first access point 18A to the second access point 18B based, at least in part, on the at least one active measurement 22; and
in response to determining that the primary data connection 20 for the apparatus 10 should be changed from the first access point 18A to the second access point 18B, releasing the first wireless connection 16A, maintaining or re-establishing the second wireless connection 18B and configuring the second wireless connection 18B as the primary data connection 20 for the apparatus 10.

The computer program instructions may be comprised in a computer program, a non-transitory computer readable medium, a computer program product, a machine readable medium. In some but not necessarily all examples, the computer program instructions may be distributed over more than one computer program.

Although the memory 134 is illustrated as a single component/circuitry it may be implemented as one or more separate components/circuitry some or all of which may be integrated/removable and/or may provide permanent/semi-permanent/ dynamic/cached storage.

In examples the memory 134 comprises a random-access memory 158 and a read only memory 160. In examples the computer program 136 can be stored in the read only memory 158. See, for example, Fig. 7B.

Although the processor 132 is illustrated as a single component/circuitry it may be implemented as one or more separate components/circuitry some or all of which may be integrated/removable. The processor 132 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:
(a) hardware-only circuitry implementations (such as implementations in only analog and/or digital circuitry) and
(b) combinations of hardware circuits and software, such as (as applicable):
   i. a combination of analog and/or digital hardware circuit(s) with software/firmware and
   ii. any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program 136. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

In examples, an apparatus 130 can comprise means for performing one or more methods, or at least part of one or more methods, as disclosed herein.

In examples, an apparatus 130 can be configured to perform one or more methods, or at least a part of one or more methods, as disclosed herein.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', `can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', `an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', `an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
at least a first wireless communication interface and a second wireless communication interface, wherein the first and second wireless communication interfaces are configured to create and maintain separate wireless connections with different access points, and wherein the first and second wireless communication interfaces are configured to operate using the same radio access technology or different radio access technologies; and
means for:
establishing a first wireless connection to a first access point using the first wireless communication interface, wherein the first wireless connection is configured as a primary data connection for the apparatus;
determining that at least a second access point is available for connection;
establishing, while the first wireless connection is established, a second wireless connection to the second access point using the second wireless communication interface;
making at least one active measurement based, at least in part, on the second wireless connection;
determining whether to change the primary data connection for the apparatus from the first access point to the second access point based, at least in part, on the at least one active measurement; and
in response to determining that the primary data connection for the apparatus should be changed from the first access point to the second access point, releasing the first wireless connection, maintaining or re-establishing the second wireless connection and configuring the second wireless connection as the primary data connection for the apparatus.

2. The apparatus as claimed in claim 1, wherein the first and the second wireless communication interfaces each are configured to operate using one of the following radio access technologies:
wireless local area network, WLAN, associated with the Institute of Electrical and
Electronics Engineers, IEEE, 802.11 family of standards, and
a 3^{rd} Generation Partnership Project, 3GPP, cellular radio access technology.

3. The apparatus as claimed in claim 1 or 2, wherein determining that at least a second access point is available for connection comprises scanning for signals from at least one available access point using the second wireless communication interface.

4. The apparatus as claimed in any preceding claim, wherein determining that at least a second access point is available for connection comprises determining that a plurality of access points is available for connection, and wherein the means are configured to:
establish in turn, while the first wireless connection is established, a second wireless connection to a plurality of access points available for connection using the second wireless communication interface;
make at least one active measurement for each of the plurality of access points to which a second wireless connection is made based, at least in part, on the second wireless connection with each of the plurality of access points;
determine whether to change the primary data connection for the apparatus from the first access point to another access point based, at least in part, on the at least one active measurement made for each of the plurality of access points to which a second wireless connection is made; and
in response to determining that the primary data connection for the apparatus should be changed from the first access point to another access point, release the first wireless connection, maintain or re-establish the second wireless connection with the another access point and configure the second wireless connection with the another access point as the primary data connection for the apparatus.

5. The apparatus as claimed in any preceding claim, wherein making at least one active measurement based, at least in part, on the second wireless connection comprises transmitting and/or receiving information using the second wireless connection.

6. The apparatus as claimed in claim 5, wherein making at least one active measurement based, at least in part, on the second wireless connection comprises at least one of:
measuring at least one rate control algorithm metric;
sending internal control message protocol, ICMP, echo packets to an endpoint of interest and measuring loss and/or round-trip time, RTT, between ICMP echo-reply packet received as response and a related ICMP echo packet;
establishing a transmission control protocol, TCP, connection and measuring throughput;
establishing a TCP connection and measuring at least one TCP metric;
measuring the size of the maximum transmission unit, MTU, on the second wireless connection;
measuring the loss of a user datagram protocol, UDP, stream to an endpoint of interest;
tracking the lower layer retransmissions on a physical WLAN link associated with the Institute of Electrical and Electronics Engineers, IEEE, 802.11 family of standards.

7. The apparatus as claimed in any preceding claim, wherein determining whether to change the primary data connection for the apparatus comprises comparing the at least one active measurement based, at least in part, on the second wireless connection and at least one corresponding active measurement based, at least in part, on the first wireless connection.

8. The apparatus as claimed in claim 7 wherein comparing the at least one active measurement based, at least in part, on the second wireless connection and at least one corresponding active measurement based, at least in part, on the first wireless connection comprises using a threshold to prevent repeated connection changes between the first access point and the second access point.

9. The apparatus as claimed in any preceding claim, wherein the means are configured to determine that the first wireless connection is degrading or is going to degrade, and wherein determining whether to change the primary data connection for the apparatus from the first access point to the second access point is based, at least in part, on determining that the first wireless connection is degrading or is going to degrade.

10. The apparatus as claimed in any preceding claim, wherein the means are configured to:
after the first wireless connection has been released, swap the roles of the first wireless communication interface and the second wireless communication interface.

11. The apparatus as claimed in any preceding claim, wherein the apparatus is a mobile user device.

12. A method comprising:
establishing a first wireless connection to a first access point using a first wireless communication interface of an apparatus, wherein the first wireless connection is configured as a primary data connection for the apparatus;
determining that at least a second access point is available for connection;
establishing, while the first wireless connection is established, a second wireless connection to the second access point using a second wireless communication interface of the apparatus, wherein the first and second wireless communication interfaces are configured to create and maintain separate wireless connections with different access points, and wherein the first and second wireless communication interfaces are configured to operate using the same radio access technology or different radio access technologies;
making at least one active measurement based, at least in part, on the second wireless connection;
determining whether to change the primary data connection for the apparatus from the first access point to the second access point based, at least in part, on the at least one active measurement; and
in response to determining that the primary data connection for the apparatus should be changed from the first access point to the second access point, releasing the first wireless connection, maintaining or re-establishing the second wireless connection and configuring the second wireless connection as the primary data connection for the apparatus.

13. The method as claimed in claim 12, wherein the first and the second wireless communication interface each are configured to operate using one of the following radio access technologies:
wireless local area network, WLAN, associated with the Institute of Electrical and
Electronics Engineers, IEEE, 802.11 family of standards, and
a 3^{rd} Generation Partnership Project, 3GPP, cellular radio access technology.

14. A computer program comprising instructions which, when executed by an apparatus, cause the apparatus to perform at least:
establishing a first wireless connection to a first access point using a first wireless communication interface of an apparatus, wherein the first wireless connection is configured as a primary data connection for the apparatus;
determining that at least a second access point is available for connection;
establishing, while the first wireless connection is established, a second wireless connection to the second access point using a second wireless communication interface of the apparatus, wherein the first and second wireless communication interfaces are configured to create and maintain separate wireless connections with different access points, and wherein the first and second wireless communication interfaces are configured to operate using the same radio access technology or different radio access technologies;
making at least one active measurement based, at least in part, on the second wireless connection;
determining whether to change the primary data connection for the apparatus from the first access point to the second access point based, at least in part, on the at least one active measurement; and
in response to determining that the primary data connection for the apparatus should be changed from the first access point to the second access point, releasing the first wireless connection, maintaining or re-establishing the second wireless connection and configuring the second wireless connection as the primary data connection for the apparatus.

15. The computer program as claimed in claim 14, wherein the first and the second wireless communication interface each are configured to operate using one of the following radio access technologies:
wireless local area network, WLAN, associated with the Institute of Electrical and
Electronics Engineers, IEEE, 802.11 family of standards, and
a 3^{rd} Generation Partnership Project, 3GPP, cellular radio access technology.
